(19) Europäisches Patentamt / European Patent Office / Office européen des brevets

(11) **EP 2 843 448 B1**

(12) **EUROPEAN PATENT SPECIFICATION**

(45) Date of publication and mention
of the grant of the patent:
**04.04.2018 Bulletin 2018/14**

(21) Application number: **13781224.4**

(22) Date of filing: **25.04.2013**

(51) Int Cl.:
***G02B 5/128*** *(2006.01)*

(86) International application number:
**PCT/KR2013/003543**

(87) International publication number:
**WO 2013/162293 (31.10.2013 Gazette 2013/44)**

(54) **PRINTED REFLECTIVE SHEET MANUFACTURED USING OPEN-TYPE BEADS**

ANHAND OFFENER KÜGELCHEN HERGESTELLTE GEDRUCKTE REFLEXIONSFOLIE

FEUILLE RÉFLÉCHISSANTE IMPRIMÉE FABRIQUÉE À L'AIDE DE PARTICULES DE TYPE OUVERTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2012 KR 20120043923**

(43) Date of publication of application:
**04.03.2015 Bulletin 2015/10**

(73) Proprietors:
• **Kim, Tae Il**
**Seoul 135-509 (KR)**
• **Han, Chul Dae**
**Seoul 135-785 (KR)**

(72) Inventors:
• **Kim, Tae Il**
**Seoul 135-509 (KR)**
• **Han, Chul Dae**
**Seoul 135-785 (KR)**

(74) Representative: **RGTH**
**Patentanwälte PartGmbB**
**Neuer Wall 10**
**20354 Hamburg (DE)**

(56) References cited:
**JP-A- H11 305 020        JP-A- 2005 208 083
JP-A- 2005 208 083        JP-A- 2005 274 983
JP-A- 2005 274 983        KR-A- 20110 120 012
KR-A- 20110 120 012**

## Description

## Technical Field

The present invention relates to a printed reflective sheet manufactured using open-type beads, and more specifically, to a printed reflective sheet which includes a printed layer and has not only high reflective brightness but also excellent recognizability of a printed image due to open-type formed in a curved structure.

## Background Art

A reflective sheet improves visibility by specularly reflecting the ray of light incident. Thus, a reflective sheet is used for a range of purposes such as identification, safety, and advertising. For example, a reflective sheet can be attached by an adhesive or sewing to clothes, shoes, bags, road signs, and advertising of various kinds. In particular, a reflective sheet is very effective for protection and insuring safety of those who work on the road or in dangerous places, such as environment cleaners, fire fighters, and construction site workers. By attaching the reflective sheet to the clothes, the location of the person who wears it can be confirmed.

A reflective sheet is generally divided into a bead type and a prism type. For a bead type, a transparent microsphere, such as glass, is mostly used as a reflector. For a prism type a structure of a triangular pyramid is mostly used as a reflector. Such types of reflective sheet have an advantage in visibility since both types retro-reflect the incident ray.

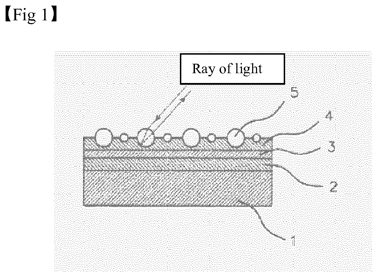

FIG 1 is a cross-sectional view, illustrating an example of a bead-type reflective sheet in accordance with the conventional art.

In reference to FIG 1, a reflective sheet generally includes a base sheet (1), an adhesive layer (2) formed on the base sheet (1), a reflective film which is formed on the adhesive layer (2). The reflective film includes a reflective layer (3) formed by metal such as aluminum (Al) being vapor-deposited, a binder layer (4) formed on the reflective layer (3), and a plurality of reflective beads (5) embedded in the binder layer (4). To attach a reflective sheet, formed in such a laminated structure, to an adherend such as clothes or shoes, generally the adhesive layer (2) is thermal-welded to the adherend by heat pressure after the base sheet (1) is peeled off and removed.

For the reflective bead (5), a glass bead with high refractive index is mainly used. The reflective beads (5) are protrusively embedded by approximately a half of the diameter in the binder layer (4) in order for high reflective brightness being provided. Such an open-type structure, wherein the reflective beads (5) are embedded in the binder layer (4), according to FIG 1, not as a whole but by approximately a half of the diameter resulting in the surface of the beads (5) protrusive, has high reflective brightness.

Recently, the reflective sheet includes a printed layer in order for the images of various colors and patterns to be realized. With a printed layer formed, the reflective sheet can be useful in advertising.

In the present invention, the term 'a printed reflective sheet' used hereinafter refers to as a reflective sheet including a printed layer. When a printed layer is formed on a reflective sheet, it is difficult for a printed layer to be formed directly on the reflective beads. Therefore, a printed layer is generally formed underneath the reflective beads, that is, on the binder layer (4) as illustrated in FIG 1.

For example, in Korean Patent No.10-0337981 [patent document 1], it is disclosed that a printed layer is formed underneath the reflective beads (5) by sublimation transfer. And in Korean Utility Model Right Registration No.20-0320016 [patent document 2] and Korean Utility Model Right Registration No. 20-0265242 [patent document 3], it is disclosed that a multicolored printed layer is formed between the reflective beads (5) and a reflective layer (3) by offset printing.

However, a printed layer which is formed underneath the reflective beads (5), that is, between the reflective beads (5) and the reflective layer (3) has a decreased recognizability of a printed image. For example, the printed image may be recognizable at a short distance less than 1 meter, but the longer the distance, the less visible the printed image is, substantially decreasing the recognizability. Accordingly, in a long distance only the reflectivity is present, but the printed image can hardly be recognizable, making the purpose (effectiveness) of including a printed layer meaningless and the commercial value thereof diminishing.

In addition, in Japanese Patent Publication No. JP2005-165302 [Patent document 4] discloses a reflective sheet, wherein a printed layer is formed underneath the reflective beads reflective beads (5). However, the recognizability of a printed image still decreases due to an influence of the reflective beads (5).

Document JP 2005 208083 A discloses a retroreflection material having at transparent resin layer formed to have uniform thickness and provided between minute spheres and a metallic reflection layer with which a hemispherical part of the minute spheres is covered. Another hemispherical part of the minute spheres is covered with a surface resin layer.

## Disclosure of Invention

## Technical Problem

It is an object of the present invention, by placing a printed layer on the reflective beads and forming the surface of a reflective sheet in an open-type of a curved structure corresponding to the reflective beads, to provide a printed reflective sheet which has not only high reflective brightness but also excellent recognizability of a printed image.

## Technical Solution

To achieve the object, the present invention provides a printed reflective sheet, including
a base sheet;
an adhesive layer formed on the base sheet;
a reflective film which is formed on the adhesive layer and has reflective beads protrusively embedded therein;
an ink fixing layer formed on the reflective film and on the protruded portions of the reflective beads;
a printed layer formed on the ink fixing layer; and
a transparent protective layer formed on the printed layer, wherein the ink fixing layer, the printed layer, and the transparent protective layer are formed in a curved structure corresponding to the protruded portions of the reflective beads.

A printed reflective sheet in accordance with the present invention may further include a delaminating member adhered to the transparent protective layer.

According to a desirable exemplary embodiment, it is preferable for a printed reflective sheet in accordance with the present invention to satisfy the following Mathematical Formula. It is more desirable for at least the ink fixing layer to satisfy the following Mathematical Formula.

### Mathematical Formula

$$T \lesssim 1/2H$$

(In the above Mathematical Formula,

### Mathematical Formula

$$T \leq 1/2H$$

(In the above Mathematical Formula,

> T: At least one selected from the group consisting of a thickness of an ink fixing layer, a thickness of a printed layer, and a thickness of a transparent protective layer,
> H: a height of the protruded portion of the reflective bead on a reflective film.)

## Advantageous Effects

A printed reflective sheet in accordance with the present invention provides excellent recognizability of a printed image as well as high reflective brightness.

## Brief Description of Drawings

> FIG 1 is a cross-sectional view of a reflective sheet according to the conventional art.
> FIG 2 is a cross-sectional view and a manufacturing process view of a printed reflective sheet in accordance with an embodiment type 1 of the present invention.
> FIG 3 is a cross-sectional view and a usage state diagram of a printed reflective sheet in accordance with an embodiment type 2 of the present invention.

> 10: an adhesive layer 20: a reflective film
> 22: a reflective bead layer 22a: a reflective beads
> 24: a bearing layer 30: an ink fixing layer
> 40: a printed layer 50: a transparent protective layer
> 60: a base sheet 70: a delaminating member
> 100: a printed reflective sheet D: a diameter of a reflective bead
> T: a thickness T30: a thickness of an ink fixing layer
> T40: a thickness of a printed layer T50: a thickness of a transparent protective layer
> P: an adherend

## Best Mode for Carrying Out the Invention

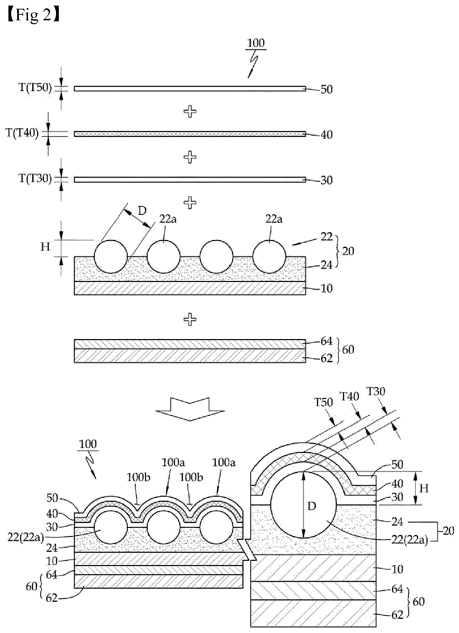

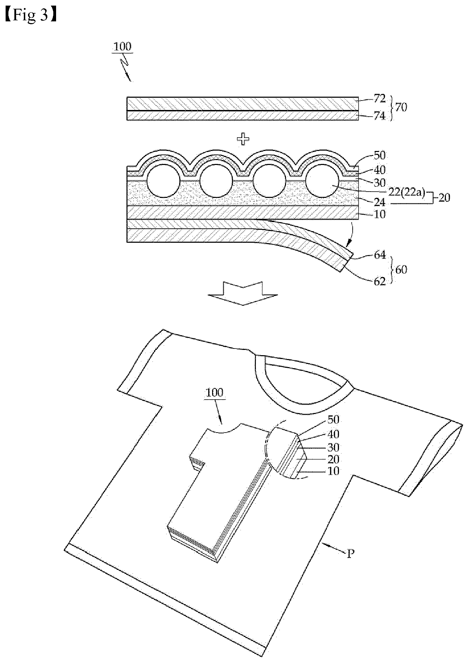

The accompanying drawings serve to explain the present invention in detail. FIG 2 and FIG 3 are showing embodiments of the present invention. Figures are provided only to render the disclosure of the present invention comprehensive, not to limit the technological scope of the present invention.

First of all, with reference to FIG 2, a printed reflective sheet (100), according to the present invention, includes a base sheet (60); an adhesive layer (10) formed on the base sheet (60); a reflective film (20) formed on the adhesive layer (10); an ink fixing layer (30) formed on the reflective film (20); a printed layer (40) formed on the ink fixing layer (30); and a transparent protective layer (50) formed on the printed layer (40), and provides open-type surface structure, more specifically, a curved surface structure (100a) (100b), corresponding to a protruding structure of a reflective bead (22a), a plurality of which are protrusively embedded in the reflective film (20).

In the present invention, open type means, as described in FIG 2, a form in which the reflective beads (22a) look as if open because an ink fixing layer (30), a printed layer (40), and a transparent protective layer (50) are orderly laminated on the reflective beads (22a), thereby forming a curved structure corresponding to the reflective beads (22a). According to the present invention, such an open-type structure, which is a curved surface structure (100a) (100b) corresponding to the reflective beads (22a), maintains high reflective brightness despite a printed layer (40) is formed on the reflective beads (22a), and has excellent recognizability of a printed image. In other words, at a long distance a printed image can be recognizable while proper reflective brightness is maintained. Explanation of the exemplary forms of each component is as in the following.

The kind of material used for the base sheet (60) is not limited as long as it has bearing power. The base sheet (60) with a property of mechanical behavior such as dimensional stability during the process of forming a printed layer (40) (the process of printing) is preferable. The base sheet (60) can be selected from the group consisting of, for example, paper, synthetic resin, and fiber materials.

For a specific example, a synthetic resin film including at least one resin selected from the group consisting of polyester, polyolefin, polyurethane, polyvinyl chloride, polyimide, and acrylic can be used for the base sheet (60). More specifically, a synthetic resin film, including at least one resin selected from the group consisting of polyethylene terephthalate (PET), polybutylene terephthalate (PBT), polyethylene naphthalate (PEN), polybutylene naphthalate (PBN), polyethylene (PE), polypropylene (PP), polyurethane (PU), polyvinyl chloride (PVC), polyimide (PI), polycarbonate (PC), polyacrylic (PA), ethylene vinyl acetate (EVA), and the copolymer thereof, can be used for the base sheet (60). For another example of the base sheet (60), a fiber sheet either woven or non-woven, made of fiber such as cotton, polyester, nylon, and the mixture thereof, and a paper sheet can be used.

The base sheet (60) can be peeled off and removed when applied to a product. When the printed reflective sheet (100) in accordance with the present invention is attached to the adherend (P, referring to FIG 3), for example clothing, the base sheet (60) can be peeled off and removed from the adhesive layer (10) in order for the bond performance between the adherend (P) and the adhesive layer (10) to be provided. To achieve this, the base sheet (60) may have release property (delaminate property). For example, release coating can be applied to at least one side of the base sheet (60). More specifically, as illustrated in FIG 2, the base sheet (60) may include a sheet base (62) and a release layer (64) with which at least one side of the sheet base (62) is coated. The sheet base (62) can be selected from the group consisting of paper, synthetic resin, and fiber, as mentioned above. The release layer (64), adhered to the adhesive layer (10), can be comprised of, for example, silicone composite which is favorable to release property.

The kind of material used for the adhesive layer (10) is not limited as long as it has an adhesive strength. For example, the adhesive layer (10) which provides the adhesive strength between the base sheet (60) and the reflective film (20) is preferable. The adhesive layer (10) may include an adhesive selected from the group consisting of natural resin and synthetic resin. For a specific example, it may include at least one adhesive selected from the group consisting of polyethylene (such as LDPE), polyurethane, acrylic, epoxy, ethylene vinyl acetate (EVA), and polyvinyl chloride.

In addition, the adhesive layer (10) can be attached to the adherend (P) after the base sheet (60) is peeled off and removed, as explained above. The adhesive layer (10) can be thermal-bonded to the adherend (P) by the heat pressure. For example, the adhesive layer (10) can be attached to the adherend (P) such as clothing by high frequency or high heat pressing method. At this, in the light of the property of textile goods and the preservation of the original form of textile after washing, polyurethane hot melt which has good elasticity can be used for the adhesive layer (10).

The reflective film (20) generally contains a plurality of reflective beads (22a). Specifically, the reflective film (20) includes a bearing layer (24), a reflective bead layer (22) formed on the top of the bearing layer (24). And the reflective bead layer (22) contains a plurality of reflective beads (22a) arranged in order.

The kind of material used for the reflective bead (22a) is not limited as long as it has photorefractive index for retro reflection. The reflective bead (22a), which is transparent, selected from the group consisting of, for example, a glass bead and a transparent synthetic resin bead such as a non-glass ceramic bead and an acrylic bead. The glass bead which has high refractive index is appropriate for the reflective bead (22a). The reflective bead (22a) may have either a globular or an oval shape, but a globular shape is preferred. The size (diameter) of the reflective bead (22a) is not limited. While it may vary depending upon the purpose or the kind of product which it may be applied to, the globular shape is preferable for the reflective bead (22a). At this, it may have a diameter (D) ranging from, for example, $1.0 \mu m$(micrometer) to 2.0m. The reflective bead (22a) may desirably have a diameter ranging from $10 \mu m$ to $1,000 \mu m$, more desirably, from $20 \mu m$ to $40 \mu m$.

The bearing layer (24) with binding power to embed and support (fix) the reflective beads (22a) is preferred. It is more desirable for the bearing layer (24) to have reflection characteristic as well as binding power.

The bearing layer (24), according to the exemplary embodiment 1, can be formed by metal paste fixed (hardened) in order for reflection characteristic. The metal paste contains metal particle and binder. The metal particle, which is for reflection characteristic, may be preferably selected from, but not limited to, the group consisting of aluminum (Al), nickel (Ni), zinc (Zn), tin (Sn), or alloy thereof. For the metal particle, aluminum (Al) or alloy thereof is desirable. In addition, the binder is to embed and support (fix) the reflective bead (22a), binding the metal particles one another. To achieve this, it is desirable for the binder to have adhesive property. The binder may be selected from the group consisting of, for example, natural resin and synthetic resin. More specifically, at least one adhesive resin, selected from the group consisting of acrylic, urethane, epoxy, polyvinyl chloride, polyethylene, and polyester can be used for the binder.

In addition, the bearing layer (24) in accordance with the exemplary embodiment 2 can have a laminated structure consisting of at least two layers. Specifically, the bearing layer (24) can include a metal reflective layer for reflection characteristic and a binder layer formed on the metal reflective layer. In the binder the reflective beads (22a) are embedded and supported (fixed). The kind of binder composing the binder layer can be the same adhesive resin as the one explained for the metal paste. The metal reflective layer is formed underneath the binder layer by metal deposition. An exemplary kind of metal forming the metal reflective layer can be the same as the one for the metal particle. The metal reflective layer can be formed by the method of thin film deposition such as sputtering, E-beam Evaporation, CVD; Chemical Vapor Deposition, or PVD; Physical Vapor Deposition.

In addition, the bearing layer (24) may include at least one selected from the group consisting of white pigment and pearl, according to the exemplary embodiment 3. Specifically, the bearing layer (24) may include a binder selected from the group consisting of natural resin or synthetic resin, a white pigment for making the white color, and/or a pearl for providing the reflective power. For the binder, as previously explained, at least one adhesive resin selected from the group consisting of, for example, acrylic, urethane, epoxy, polyvinyl chloride, polyethylene, polyester. The kind of white pigment is not limited as long as it is white in color. In case the bearing layer (24) includes a white pigment as such, a white background can be provided, thereby making a printed image clearer and easily recognizable.

The reflective bead (22a) is protrusively embedded on the reflective film (20) as shown by the drawing. Specifically, only the portion of the diameter of the reflective bead (22a) is embedded in the bearing layer (24), the rest is protruded (exposed) on the surface of the bearing layer (24). At this, the desirable size of the portion to be protruded is ranging from one-third to two-third of the diameter (D). Specifically, for the height (H) of the reflective bead (22a) protruded on the surface of the reflective film (2), that is, the bearing layer (24), it is desirable to be ranging from one-third to two-third of the diameter (D). The term "protrusion height" used hereinafter refers to as a height (H) of the reflective bead (22a) protruded on the surface of the reflective film (20). For example, provided the diameter(D) of the reflective bead (22a) is 90$\mu$m, the desirable protrusion height (H) is ranging between 30$\mu$m and 60$\mu$m. With such a range of protrusion height (H), binding power as well as proper reflective brightness can be provided. On the other hand, the protrusion height (H) less than or equal to one-third of the diameter (D) can hardly provide proper reflective brightness. And in case of the protrusion height (H) more than or equal to two-third of the diameter (D), the binding power to the bearing layer (24) is weaken, causing the reflective beads (22a) breaking apart. Considering these, a half of the diameter (D) in protrusion height (H) is more desirable. In other words, it is more desirable that one half of the diameter (D) of the reflective beads (22a) is embedded in, and the other half is protruded on the bearing layer (24).

The reflective film (20) may be manufactured by a variety of methods. The reflective film (20) may be manufactured by the method generally used. For example, the reflective film (20) can be manufactured by the method that a separating layer is formed by a resin applied on a carrier film, and the reflective beads (22a) are embedded in the separating layer to the appropriate depth, forming the bearing layer (24) on the reflective beads (22a), and then the carrier film and the separation layer are separated from the reflective beads (22a).

The ink fixing layer (30), which is to form a printed layer (40) (to print), is formed on the top of the reflective beads (22a). Specifically, the ink fixing layer (30), with which the protruding portions of the reflective beads (22a) are coated, as illustrated in FIG 2, is formed on the reflective film (20). When the printed layer (40) is formed, that is, printed, the ink settles on the surface of this ink fixing layer (30).

The ink fixing layer (30) which can be printed on the surface thereof is desirable. It is more desirable for the ink fixing layer (30) to have proper binding power to the reflective beads (22a) and to enable for the ink to settle to the optimal condition. The ink fixing layer (30) can be formed by being coated with a composite including an adhesive resin. Such composite includes at least one resin selected from the group consisting of, for example, silicone resin, polyurethane (PU), melamine resin, polyvinyl chloride (PVC), polyvinyl alcohol (PVA), and acrylic resin.

The ink fixing layer (30) is desirably formed by being coated with an ink fixing composite in which the ink fixing primer is added to the above mentioned resin as a base resin. At this, the ink primer, which is for the purpose of proper ink settlement, may be selected from the ingredients included in the ink desirably for the printed layer (40) to be formed. The ink primer may include at least one ingredient, generally contained in the ink, selected from, but not limited to, the group consisting of a moistening agent, and a surfactant.

For more specific example, the ink fixing composite may include at least one base resin selected from the above mentioned resins such as silicone resin, polyurethane (PU), melamine resin, polyvinyl chloride (PVC), polyvinyl alcohol (PVA), and acrylic resin; an ink primer; and a solvent. For 100% by weight of the base resin, 0.1 to 50% by weight of the ink primer and 30 to 150% by weight of solvent can be included. The ink primer can include a moistening agent and a surfactant. For 100% by weight of the base resin, 0.05 to 30% by weight of the moistening agent and 0.05 to 20% by weight of the surfactant can be included. In case the ink fixing layer (30) is formed by using the ink fixing composite containing such ingredients and content, the ink can settle in the optimal condition without a change in reflective brightness.

For the moistening agent, for example, at least one can be selected from the group consisting of glycerin, ethylene glycol, diethylene glycol, triethylene glycol, propylene glycol, dipropylene glycol, hexylene glycol, 1,3-butanediol, 1,4-butanediol, 1,5-pentanediol, 2-butene-1,4-diol, and 2-methyl-2-pentanediol. For the surfactant at least one can be selected from the group consisting of, for example, polyoxyethylene alkyl ether, polyoxyethylene alkyl phenyl ether, polyglycerine fatty acid ester, and sorbitan fatty acid ester. And for the solvent, at least one can be selected from the group consisting of, for example, water, ethanol, isopropanol, butanol, and pentanol.

In addition to the moistening agent and surfactant, the ink primer may further include inorganic filler, for which at least one selected from the group consisting of silica, clay, talc, diatomite, zeolite, carbonic calcium, alumina, zinc oxide, and titanium dioxide can be exemplified. 0.1 to 10% by weight of the inorganic filler can be included to 100% by weight of the base resin. In addition, the inorganic filler of a fine-size, for example, less than or equal to $2.0\mu m$ is preferable. More specifically, the inorganic filler of a fine-size ranging between $0.01\mu m$ and $2.0\mu m$ can be used.

The method for forming the ink fixing layer (30) is not limited. A variety of coating (or printing) methods can be adopted. The ink fixing layer (30), for example, can be formed by being coated with the ink fixing composite more than one time by using at least one method selected from the group consisting of spray coating, comma knife coating, gravure coating, slot die coating, and UV coating using the above mentioned methods. After coated with the ink fixing composite, it is desirable that the ink fixing layer (30) keep in the degummed yarn where the temperature ranging between 40 and 50°C is maintained for 20 to 30 hours until it becomes dry for proper settlement of the ink.

The printed layer (40) is formed by the method of printing on the ink fixing layer (30). The composition of the ink is not limited. The ink, for example, can contain at least 4 primary colors of C(Cyon), M(Magenta), Y(Yellow), and K(Black) as general, and also include the other colors (dyes or pigment). For a specific example, the ink can include 4 primary colors; an ink fixing resin and an ink primer. At this, the same kind of ink primer as explained for the ink fixing layer (30) can be used. The ink fixing resin can be selected from the group consisting of, for example, polyurethane (PU), silicone resin, melamine resin, polyvinyl chloride (PVC), and polyvinyl alcohol (PVA).

For more specific example, the printed layer (40) can be formed by using the ink made in a way that the mixture of 4 primary colors (C,M,Y,K); an ink fixing resin (such as PU); and an ink primer, and a hardening agent are mixed by 100% : 8% by weight, then the above blend is diluted in the diluted solvent made by toluene and methyl ethyl ketone (MEK) being mixed by 5% : 5% by weight. The ink can be a mixture containing 60 to 70% by weight of the above blend and 30 to 40% by weight of the diluted solvent.

Other than the above mentioned ingredients, the ink may further include a viscosity adjusting agent such as carboxyl cellulose. In the present invention, the composition of the ink is not limited, and the one generally used in the field of printing can be adopted.

A variety of images can be realized on the printed layer (40) with a variety of colors and patterns. The type of image realized on the printed layer (40) is not limited; the images can be expressed in, for example, letters, shapes, drawings, photos, or the combination thereof. The printed layer (40) can be formed by many different printing methods. For example, the printed layer (40) can be formed by, but is not limited to, UV offset printing, UV gravure printing, UV seal printing, screen printing, digital actual image printing (solvent, water-based, UV), and the method of sublimation or transfer of a printed image.

The transparent protective layer (50) protects the printed layer (40). The printed layer (40) can be transformed, peeled off, and crumbled by external forces such as moisture or impact. Formed on the printed layer (40), the transparent protective layer (50) prevents from such phenomenon. The transparent protective layer (50) is formed by being coated with a transparent resin. A thermosetting resin or an UV hardening resin can be used for the resin composing such transparent protective layer (50). A resin which is not yellowing as time passes is preferable. Considering this, the transparent protective layer (50) can be formed by being coated with at least one transparent resin, selected from the group consisting of silicone resin, polyurethane (PU), acrylic resin, epoxy resin, polyvinyl chloride (PVC), and polyester.

The transparent protective layer (50) with waterproof property is desired in order for preventing from water permeation. For this reason, it is desirable the transparent protective layer (50) have at least one non-hydrophilic resin, as a base resin, selected from the group consisting of silicone resin and polyurethane (PU), which has good waterproof property.

The transparent protective layer (50) may further include a separate waterproof agent. Specifically, the transparent protective layer (50) can be formed by being coated with a transparent resin composite in which the waterproof agent is added to the transparent resin, as a base resin, selected from the above mentioned resins. At least one selected from the group consisting of the bentonite, silicone (such as organo polysiloxane), and urethane (polyurethane) can be exemplified for the waterproof agent.

In accordance with an exemplary embodiment of the present invention, excellent recognizability of a printed image as well as high reflective brightness can be provided due to a laminated structure including a printed layer (40) formed on the top of the reflective beads (22a), thereby making a curved surface structure (100a) (100b) corresponding to a protrusive structure of the reflective beads (22a).

More specifically, the printed reflective sheet (100) in accordance with an exemplary embodiment of the present invention has a structure in which the ink fixing layer (30), the printed layer (40), and the transparent protective layer (50) are orderly laminated on the top of, that is, on the protruding portions of the reflective beads (22a) as illustrated in FIG 2, forming a curved structure of the ink fixing layer (30), the printed layer (40), and the transparent protective layer (50) corresponding to the reflective beads (22a). Accordingly, the surface of the printed reflective sheet (100), that is, the side at which an observer looks (the side exposed to a ray of light), has a curved surface structure (100a) (100b) consisting of the protruding (100a) and the recessive (100b) portions, corresponding to the protruding (exposed) portions of the reflective beads (22a). As a result, according to the present invention, the printed reflective sheet (100) not only has excellent reflective brightness but also has recognizability of the printed layer (40) from a distance. In other words, excellent recognizability of a printed image can be possible while high reflective brightness can be provided by the open-type.

If the ink fixing layer (30), the printed layer (40), and the transparent protective layer (50) are formed in a flat structure, not in a curved structure as presented in the present invention, the recognizability of a printed image may be satisfactory but the visibility, which is the primary purpose of using the reflective sheet (100), may be significantly declined. In other words, a flat structure obstructing the refraction of the beads significantly degrades the reflective brightness. In case the printed layer (40) is formed underneath the reflective beads (22a) according to the conventional art, the printed image is hardly recognizable from a distance, as previously explained.

However, according to an exemplary embodiment of the present invention, when the curved surface structure (100a) (100b) is formed on the reflective beads (22a), the open-type structure provides high reflective brightness. In other words, high reflective brightness can be maintained since the surface of the reflective sheet (100) is formed in the reflective beads protruding against the direction of a ray of light incident, more specifically, since the ink fixing layer (30), the printed layer (40), and the transparent protective layer (50) are formed in a shape of bead. Since the printed layer (40) is formed on the top of the reflective beads (22a), the ink can properly settle on the ink fixing layer (30), and a vivid image can be implemented resulting in excellent recognizability of a printed image from a distance.

According to the desirable exemplary embodiment, it is desirable for the ink fixing layer (30) to have an equal thickness (T) throughout the surface of the reflective film (20) in order for promoting the reflective brightness by the curved surface structure (100a) (100b). Specifically, referring to FIG 2, it is desirable for the ink fixing layer (30) to be formed on the top of the reflective film (20) and have an equal thickness (T) (T30) throughout the surface of the reflective film (20) in order for a curved surface structure (100a) (100b) to be provided.

It is preferable that the ink fixing layer (30) satisfy Mathematical Formula 1 below.

[Mathematical Formula 1]

$$T \leq 1/2H$$

[In the above Mathematical Formula 1,

T: a thickness (T30) of the ink fixing layer (30),
H: a height of the reflective bead (22a) protruded (exposed) on the surface of the reflective film (20).]

Specifically, it is desirable for the thickness (T) (T30) of the ink fixing layer (30) to be more than 0 and less than or equal to one half of the height (H), and more desirably, more than 0 and less than or equal to one-third of the height(H). It is preferable that the ink fixing layer (30) satisfy the above Mathematical Formula 1 and have a thickness (T) (T30) less than or equal to micrometer ($\mu$m), while varying depending upon the diameter (D) of the reflective bead (22a).

According to the desirable exemplary embodiment, it is desirable for the ink fixing layer (30) to have a thickness (T) (T30) less than or equal to a micrometer ($\mu$m), specifically, less than or equal to 300$\mu$m, and more specifically, to have a thickness (T) (T30) ranging between 0.1$\mu$m and 300$\mu$m. When the thickness (T) (T30) of the ink fixing layer (30) is less than 0.1$\mu$m, the thickness may be too thin to provide proper ink fixing quality when the printed layer (40) is formed. Also, when the thickness is too thin, the recognizability of a printed image can be declined by an influence of reflective brightness. On the other hand, when the thickness is more than 300$\mu$m, it may be too thick for the printed layer (40) and the transparent protective layer (50) to be formed in a curved surface structure (100a) (100b). Also, when it is too thick, the reflective brightness can be declined. In light of these, it is more desirable for the ink fixing layer (30) to have a thickness (T) (T30) ranging between 2.0$\mu$m and 100$\mu$m.

Also, it is desirable the printed layer (40) and the transparent protective layer (50) be formed in an equal thickness (T), as explained in the above.

Specifically, it is desirable for the printed layer (40) to have an equal thickness (T) on the surface of the reflective film (20). More specifically, it is desirable the printed layer (40) be formed in an equal thickness (T) (T30) throughout the surface of the ink fixing layer (30) and satisfy Mathematical Formula 2 below.

[Mathematical Formula 2]

$$T \leq 1/2H$$

[In the above Mathematical Formula 2,

T: a thickness (T40) of the printed layer (40),
H: a height of the reflective bead (22a) protruded (exposed) on the surface of the reflective film (20).]

Specifically, it is desirable for the thickness (T) (T40) of the printed layer (40) to be more than 0 and less than or equal to 1/2H, and more desirably, to be more than 0 and less than or equal to 1/3H. it is preferable for the printed layer(40), while it may vary depending upon the diameter (D) of the reflective beads (22a), to have a thickness (T) (T40) less than micrometer ($\mu$m), for example less than 300$\mu$m, and for more specific example, to have a thickness (T) (T40) ranging between 5.0$\mu$m and 300$\mu$m. In case the thickness (T) (T40) of the printed layer (40) is less than 5.0$\mu$m, the print may be too thin for the printed image to be properly recognized. And in case it is more than 300$\mu$m, the print may be too thick for the transparent protective layer (50) to be formed in a curved structure (100a) (100b). In light of these, it is more desirable for the printed layer (40) to have a thickness (T) (T40) ranging between 10.0$\mu$m and 150$\mu$m.

In addition, it is desirable for the transparent protective layer (50) to have an equal thickness (T) on the surface of the reflective film (20). More specifically, it is desirable for the transparent protective layer (50) to be formed in an equal thickness (T) (T50) throughout the surface of the printed layer (40). And it is preferable for the transparent protective layer (50) to satisfy the below Mathematical Formula 3.

[Mathematical Formula 3]

$$T \leq 1/2H$$

[In the above Mathematical Formula 3,

T: a thickness (T50) of the transparent protective layer (50),
H: a height of the reflective bead (22a) protruded (exposed) on the surface of the reflective film (20).]

Specifically, it is desirable for the thickness (T) (T50) of the transparent protective layer (50) to be more than 0 and less than or equal to one half of the height (H), and more desirably, to be more than 0 and less than or equal to one-third of the height (H). The transparent protective layer (50) may have a thickness (T) (T50) less than or equal to a micrometer ($\mu$m), for example, less than or equal to 300$\mu$m, and for more specific example, a thickness (T) (T50) ranging between 0.1$\mu$m and 300$\mu$m, while varying depending upon the diameter (D) of the reflective beads (22a). When the thickness (T) (T50) of the transparent protective layer (50) is less than 0.1$\mu$m, it may be too thin to have an effect in the function of protecting a printed layer (40). On the other hand, the thickness (T) (T50) is more than 300 $\mu$m, it may be too thick to have a curved surface structure (100a) (100b) formed or to have proper reflective brightness. In light of these, it is more desirable for the transparent protective layer (50) to have a thickness (T) (T50) ranging between 2.0$\mu$m and 100$\mu$m.

Meanwhile, the printed reflective sheet (100) in accordance with the present invention may further include a delaminating member (70, referring to FIG 3). FIG 3 is exemplifying a cross-sectional view and a usage state diagram of the printed reflective sheet (100) according to the embodiment type 2 of the present invention.

With reference to FIG 3, the delaminating member (70) can be adhered to the transparent protective layer (50), and can be peeled off after the printed reflective layer (100) is transferred to the adherend (P). As previously described, the printed reflective sheet (100) in accordance with the present invention can be attached to the adherend (P) by heat pressure technique using high frequency or high heat press. At this, the delaminating film (70) prevents from the damage on the surface caused by heat pressure.

More specifically, the printed reflective sheet (100) in accordance with the present invention can be attached to the adherend (P) by heat pressure. As illustrated in FIG 3, the base sheet (60) formed underneath the adhesive layer (10) can be peeled off and removed. After that, the adhesive layer (10) can be adhered to the adherend (P), and then the heat and press are applied onto the top of the delaminating member, thereby melting the adhesive layer (10) to promote the adhesive strength thereof to the adherend (P). After that, the delaminating member (70) can be peeled off and removed. As a result, the delaminating member (70) can prevent from the damage on the surface incurred by heat pressure, that is, from thermal strain of the transparent protective layer (50) and the curved surface structure (100a) (100b).

The delaminating member (70) may include a base member (72) and a viscous layer (74) formed on at least one side of the base member (72). The base member (72) with heat resisting property is preferable, and can be selected from the group of, for example, synthetic resin and fiber material. For a specific example, the base member (72) can comprise a fiber sheet woven or non-woven or synthetic resin selected from polyester film favorable to thermal resistance, such as polyethyleneterephthalate (PET), polybutyleneterephthalate (PBT), polyethylenenaphthalate (PEN) and polybutylenenaphthalate (PBN). It is desirable for the viscous layer (74) to have proper viscosity and the release power. For example, it can be formed by being coated with at least one adhesive agent, selected from the group consisting of silicone and acrylic.

According to the present invention, the printed reflective sheet(100) can further include, other than the above mentioned components, a separate functional layer which generally applies to the field, such as a hologram layer for anti-forgery, and a foaming layer or rubber layer for three-dimensional effect.

The printed reflective sheet (100) in accordance with the present invention can apply to many different fields for various purposes such as protection and safety for a person who wears it, for security, for anti-forgery, and for advertising. In other words, the kind of adherend (P) is not limited according to the present invention. The adherend (P) may be a half-finished or a finished product, and selected from the group consisting of, for example, clothing, shoes, bags, printed materials, road signs, and advertisings of all kind. FIG 3 illustrates clothing (clothes) as an example of the adherend (P).

As previously explained, the printed reflective sheet (100) in accordance with the present invention has high reflective brightness and excellent recognizability of a printed image as well. As a result, the printed reflective sheet (100) in accordance with the present invention can be effectively used for identification in a dark place or at night, for value improvement of the product such as clothing, and for advertising.

## Claims

1. A printed reflective sheet (100), comprising
a base sheet (60);
an adhesive layer (10) formed on the base sheet (60); and
a reflective film (20), formed on the adhesive layer (10), wherein reflective beads (22a) are protrusively embedded therein;
**characterized by** an ink fixing layer (30) formed on the reflective film (20) and on the protruded portions of the reflective beads (22a);
a printed layer (40) formed on the ink fixing layer (30); a transparent protective layer (50) formed on the printed layer (40); and a curved structure of the ink fixing layer (30), the printed layer (40), and the transparent protective layer (50) corresponding to the protruding portions (100a, 100b) of the reflective beads (22a).

2. Printed reflective sheet according to Claim 1 **characterized by** satisfying the following mathematical formula:

$$\bar{T} \leq 1/2H$$

where T denotes at least one thickness selected from the group consisting of a thick-ness of the ink fixing layer (30), a thickness of the printed layer (40), and a thickness of the transparent protective layer (50), and H denotes a height of a reflective bead (22a) protruded on the surface of the reflective film (20).

3. Printed reflective sheet according to any of the preceeding claims, further **characterized by** the ink fixing layer (30) having a thickness ranging between 0.1µm and 300µm.

4. Printed reflective sheet according to claim 1 or 2, further **characterized by** the ink fixing layer (30) including a base resin and at least one ink primer selected from the group consisting of moistening agent and a surfactant.

5. Printed reflective sheet according to claim 4, further **characterized by** the base resin including at least one resin selected from the group consisting of silicone resin,
polyurethane (PU), melamine resin, polyvinyl chloride (PVC), polyvinyl alcohol (PVA), and acrylic resin,

6. Printed reflective sheet according to claim 1 or 2, further **characterized by** the transparent protective layer (50) including at least one resin selected from the group consisting of silicone resin and polyurethane.

7. Printed reflective sheet according to claim 1 or 2, further **characterized by** the transparent protective layer (50) including a transparent resin and a waterproof agent.

8. Printed reflective sheet according to claim 1 or 2, further **characterized by** further including a delaminating member (70) adhered to the transparent protective layer (50).

9. Printed reflective sheet according to claim 1 or 2, further **characterized by** the printed layer (40) formed by the methods of UV offset printing, UV gravure printing, UV sealing printing, screen printing, digital actual image printing, or the sublimation or transfer of a printed image.

10. Printed reflective sheet according to claim 1 or 2, further **characterized by** the reflective film (20) including a bearing layer (24) and reflective beads (22a) protrusively embedded therein, and by
the bearing layer (24) including at least one selected from the group consisting of white pigment and pearl.

## Patentansprüche

1. Gedruckte reflektierende Folie (100), umfassend
eine Basisfolie (60);
eine Klebeschicht (10), die auf der Basisfolie (60) ausgebildet ist;
einen reflektierenden Film (20), der auf der Klebeschicht (10) ausgebildet ist, wobei reflektierende Kügelchen (22a) vorspringend darin eingebettet sind;
**gekennzeichnet durch**
eine Tintenfixierschicht (30), die auf dem reflektierenden Film (20) und auf den vorstehenden Bereichen der reflektierenden Kügelchen (22a) ausgebildet ist;
eine gedruckte Schicht (40), die auf der Tintenfixierschicht (30) ausgebildet ist; eine transparente Schutzschicht (50), die auf der gedruckten Schicht (40) ausgebildet ist, und
eine gekrümmte Struktur der Tintenfixierschicht (30), der gedruckten Schicht (40) und der transparenten Schutzschicht (50) entsprechend den vorstehenden Bereichen (100a, 100b) der reflektierenden Kügelchen (22a).

**2.** Gedruckte reflektierende Folie gemäß Anspruch 1, **dadurch gekennzeichnet, dass** die folgende mathematische Formel erfüllt ist:

$$T \leq 1/2\ H,$$

wobei T

mindestens eine Dicke ausgewählt aus der Gruppe bestehend aus einer Dicke der Tintenfixierschicht (30), einer Dicke der gedruckten Schicht (40) und einer Dicke der transparenten Schutzschicht (50) bezeichnet,
und H
eine Höhe eines reflektierenden Kügelchens (22a), das auf der Oberfläche des reflektierenden Films (20) hervorsteht, bezeichnet.

**3.** Gedruckte reflektierende Folie gemäß der vorhergehenden Ansprüche, **dadurch gekennzeichnet, dass** die Tintenfixierschicht (30) eine Dicke im Bereich zwischen 0,1 μm und 300 μm aufweist.

**4.** Gedruckte reflektierende Folie gemäß Anspruch 1 oder 2,
ferner **dadurch gekennzeichnet, dass** die Tintenfixierschicht (30) ein Grundharz und mindestens einen Tintenprimer ausgewählt aus der Gruppe bestehend aus einem Befeuchtungsmittel und einem Tensid beinhaltet.

**5.** Gedruckte reflektierende Folie gemäß Anspruch 4, ferner **dadurch gekennzeichnet, dass** das Grundharz mindestens ein Harz ausgewählt aus der Gruppe bestehend aus Silikonharz, Polyurethan (PU), Melaminharz, Polyvinylchlorid (PVC), Polyvinylalkohol (PVA) und Acrylharz beinhaltet.

**6.** Gedruckte reflektierende Folie gemäß Anspruch 1 oder 2, ferner **dadurch gekennzeichnet, dass** die transparente Schutzschicht (50) mindestens ein Harz ausgewählt aus der Gruppe von Silikonharz und Polyurethan beinhaltet.

**7.** Gedruckte reflektierende Folie gemäß Anspruch 1 oder 2, ferner **dadurch gekennzeichnet, dass** die transparente Schutzschicht (50) ein transparentes Harz und ein wasserfestes Mittel beinhaltet.

**8.** Gedruckte reflektierende Folie gemäß Anspruch 1 oder 2, ferner **dadurch gekennzeichnet, dass** sie ferner ein an der transparenten Schutzschicht (50) haftendes Delaminierungselement (70) beinhaltet.

**9.** Gedruckte reflektierende Folie gemäß Anspruch 1 oder 2, ferner **dadurch gekennzeichnet, dass** die gedruckte Schicht (40) durch die Verfahren UV-Offsetdruck, UV-Tiefdruck, UV-Versiegelungsdruck, Siebdruck, digitalen Ist-Bilddruck oder die Sublimation oder Übertragung eines gedruckten Bildes ausgebildet wird.

**10.** Gedruckte reflektierende Folie gemäß Anspruch 1 oder 2, ferner **dadurch gekennzeichnet, dass** der reflektierende Film (20) eine Tragschicht (24) und reflektierende Kügelchen (22a) beinhaltet, die vorspringend darin eingebettet sind, und dadurch, dass die Tragschicht (24) mindestens eine ausgewählt aus der Gruppe bestehend aus weißem Pigment und Perle beinhaltet.

**Revendications**

**1.** Feuille réfléchissante imprimée (100), comprenant
une feuille de base (60) ;
une couche adhésive (10) formée sur la feuille de base (60) ; et
un film réfléchissant (20) formé sur la couche adhésive (10), dans laquelle des particules réfléchissantes (22a) sont noyées de manière protubérante dans celui-ci;
**caractérisée par**
une couche de fixation d'encre (30) formée sur le film réfléchissant (20) et sur les parties protubérantes des particules réfléchissantes (22a) ;
une couche imprimée (40) formée sur la couche de fixation d'encre (30) ;
une couche de protection transparente (50) formée sur la couche imprimée (40) ; et
une structure curviligne de la couche de fixation d'encre (30), la couche imprimée (40) et la couche de protection transparente (50) correspondant aux parties protubérantes (100a, 100b) des particules réfléchissantes (22a).

**2.** Feuille réfléchissante imprimée selon la revendication 1,
**caractérisée en ce qu'**elle satisfait à la formule mathématique suivante :

$$T \leq 1/2H$$

où T indique au moins une épaisseur sélectionnée dans le groupe formé par une épaisseur de la couche de fixation d'encre (30), une épaisseur de la couche imprimée (40) et une épaisseur de la couche de protection transparente (50), et H indique une hauteur d'une particule réfléchissante (22a) qui est protubérante à la surface du film réfléchissant (20).

3. Feuille réfléchissante imprimée selon l'une quelconque des revendications précédentes, **caractérisée par** la couche de fixation d'encre (30) ayant une épaisseur comprise entre 0,1 µm et 300 µm.

4. Feuille réfléchissante imprimée selon la revendication 1 ou 2, **caractérisée par** la couche de fixation d'encre (30) comprenant une résine de base et au moins un apprêt d'encre sélectionné dans le groupe formé par un agent humidifiant et un surfactant.

5. Feuille réfléchissante imprimée selon la revendication 4, **caractérisée par** la résine de base comprenant au moins une résine sélectionnée dans le groupe formé par de la résine de silicone, du polyuréthane (PU), de la résine de mélamine, du chlorure polyvinylique (PVC), de l'alcool polyvinylique (PVA) et de la résine acrylique.

6. Feuille réfléchissante imprimée selon la revendication 1 ou 2, **caractérisée par** la couche de protection transparente (50) comprenant au moins une résine sélectionnée dans le groupe formé par une résine de silicone et du polyuréthane.

7. Feuille réfléchissante imprimée selon la revendication 1 ou 2, **caractérisée par** la couche de protection transparente (50) comprenant une résine transparente et un agent imperméabilisant.

8. Feuille réfléchissante imprimée selon la revendication 1 ou 2, **caractérisée en ce qu'**elle comprend en outre un élément de délaminage (70) adhérant à la couche de protection transparente (50).

9. Feuille réfléchissante imprimée selon la revendication 1 ou 2, **caractérisée par** la couche imprimée (40) formée par les procédés d'impression offset UV, d'impression UV et gravure, d'impression UV et scellement, de sérigraphie, d'impression d'image réelle numérique, ou de sublimation ou de transfert d'une image imprimée.

10. Feuille réfléchissante imprimée selon la revendication 1 ou 2, **caractérisée par** le film réfléchissant (20) comprenant une couche de support (24) et des particules réfléchissantes (22a) noyées de manière protubérante dans celle-ci, et par la couche de support (24) comprenant au moins l'un sélectionné dans le groupe formé par un pigment blanc et une perle.

【Fig 1】

【Fig 2】

【Fig 3】

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100337981
- KR 200320016
- KR 200265242
- JP 2005165302 A
- JP 2005208083 A